# EUROPEAN PATENT APPLICATION

(11) **EP 4 636 965 A1**
(43) Date of publication of application: **22.10.2025**
(21) Application number: 24170440.2
(22) Date of filing: 16.04.2024
(51) Int. Cl.: H02G 3/04, H02G 15/34, H02G 1/08, B60R 16/02

(54) **PROTECTION DEVICE FOR WIRING HARNESSES, PROTECTIVE ELEMENT**

(71) Applicant: Airbus Operations GmbH, 21129 Hamburg (DE)
(72) Inventor: Zerzer, Daniel, 21129 Hamburg (DE); Böhnke, Björn, 21129 Hamburg (DE); Fürstenberg, Malte, 21129 Hamburg (DE)

(57) **Abstract**

The present invention relates to a protection device (10) for wiring harnesses. This protection device (10) comprises a protective element arrangement, which is designed to be arranged around a wiring harness (7), with first sections (1) in direct contact with the wiring harness (7) and second sections (2) spaced apart from the wiring harness (7). The first and second sections (1, 2) alternate iteratively in a longitudinal direction of the wiring harness (7) on which the protective device (10) is arranged, so that the wiring harness (7) can be spaced from inner wall areas of a tube (8) by the protection device (10) during positioning in this tube (8). Furthermore, a use of this protection device (10) and a protective element (11) is presented.

## Description

### TECHNICAL FIELD OF THE INVENTION

The present invention relates to a protection device for wiring harnesses, a protective element and a use of the protection device.

### TECHNICAL BACKGROUND

In more complex technical devices and systems, it is common practice to bundle wires, such as electrical connecting wires and the like, into so-called wiring harnesses in order to accelerate and, above all, simplify more complex production.

In the aircraft industry in particular, this procedure is a common way of providing preliminary products in the form of cable harnesses or the like in order to promote a modular and, above all, division of labor production method.

If wiring harnesses are to be installed in other assemblies, for example in tank arrangements or the like, it is also common practice to use protective tubes. Wiring harnesses or just bundles of electrical wires or the like are routed in the interior of these protective tubes in order to protect them from external influences. In the aircraft industry, such tanks can be cryogenic hydrogen tanks, for example.

There is currently a need for alternative technical concepts for a defined placement of wiring harnesses or loose cables in such protective tubes.

### SUMMARY OF THE INVENTION

Against this background, it is an object of the present invention to provide a new technical concept that suits the need for a defined placing of wires or wiring harnesses inside pipes.

This object is achieved by a protection device having the features of claim 1, a protective element having the features of claim 10 and a use of the protection device having the features of claim 15.

According to the invention, a protection device for wiring harnesses comprises a protective element arrangement, which is designed to be arranged around a wiring harness, with first sections in direct contact with the wiring harness and second sections spaced apart from the wiring harness, wherein the first and second sections alternate iteratively in a longitudinal direction of the wiring harness on which the protective device is arranged, so that the wiring harness can be spaced from inner wall areas of a tube by the protection device during positioning in this tube.

The protection device helps to avoid damaging of the wiring harness during installation and also during lifetime, which leads to reduced failures and less replacements of the wires or an environment, for example in the form of pipes. The interior of the pipes can thus also be protected from unwanted influences caused by the inserted wiring harness or the like. In this context, the term *"positioning"* refers to both scenarios mentioned above.

For applications within an aircraft, relative movements of the wiring harness in relation to the tube can be reduced to an absolute minimum or even completely avoided, which increases therefore a durability of the wiring harness. The relative movements can, for example, occur in the aircraft due to different usage phases such as starting and landing procedures or special flight maneuvers such as turns or the like.

Scenarios with various other non-stationary objects, in which the invention is build-in or provided, are also conceivable. Such objects can be, for example, any other vehicles, such as vehicles, motor vehicles, boats. An application with any other flying objects, such as helicopters, airships, rockets, is also conceivable.

Additionally, the advantageous design of the inventive protection device enables any inspection tasks of the wiring harness or the tube in which the wiring harness together with the protection device is positioned. For these purposes, the respective sections can be arranged and provided so that inspections, for example with the help of endoscope-systems (like endoscopy cameras etc.) or maintenance robots or the like, can be possible without any problems.

The sections can also be arranged and designed so that they at least partially allow fluids or gases to flow through the tube and at the same time enable a substantially fixed positioning of the wiring harness in the tube.

It is conceivable that the first sections, which are in direct contact with the wiring harness, are each intended for use in such a way that a substantially stationary positioning of the protective device on the wiring harness can be achieved.

It is also conceivable that the respective second sections are dimensioned and designed in such a way that an installation with a certain amount of force without damage is possible, but relative movements can subsequently be avoided.

The protective element arrangement can also be dimensioned and designed so that a substantially centralized positioning of the wiring harness can be possible with respect to a cross section of the tube into which the wiring harness is to be inserted.

In other words, the presented invention offers the advantage that it keeps a single wire or a wiring harness centralized inside a pipe (or tube or similar object) in which the single wire or the wiring harness is positioned. It also prevents a contact of the single wire or the wiring harness to the pipe (or tube or similar object). It also secures a clearance of the single wire or the wiring harness to the pipe (or tube or similar object) during pulling them through the pipe (or tube or similar object). It also secures the clearance of the single wire or the wiring harness to the pipe (or tube or similar object) being in operation.

Wires or the wiring harness are known in different industries, for example in the aircraft industry. Stationary tanks, for example, already use the so called "lyra" concept, where wires are routed inside a pipe. And this pipe is entering all layers of a cryogenic tank. The wires lay simply inside the pipe. Therefore the wires are able to touch or to be in immediate contact to inner walls of the pipe. This occurs during installation of the wire or the wiring harness into the pipe as well as during operations. The wires or the wiring harness are just protected by their own sleeves. The presented invention provides additional protection, especially when taking sagging, vibration, aging into consideration. Future and existing technical specifications, particularly in the aircraft industry, can thus be met using the present invention.

Further according to the invention, a protective element for use in a protection device according to the presented invention comprises a second section and two first sections enclosing this second section wherein the second section and the two first sections are connected to each other to form a substantially wave-shaped shape or wherein the second section and the two first sections are materially connected to one another to form a substantially wave-shaped shape, so that the second section is a part of an amplitude arrangement of the wave-shaped shape.

Due to the wave-shaped shape, it is possible to use the presented element in such a way that the enclosed second section is a part of an amplitude arrangement of the wave-shaped shape, thereby enabling spacing the protective elements in these regions of inner parts of objects or parts thereof in which the protective element is provided.

In relation to the use with the protective device according to the invention, it is therefore possible, for example, to place inner pipe walls at a defined distance from the first sections. At the same time, the wave-shaped shape provided offers a certain degree of flexibility, so that in the case of a curved pipe in which the protective element respectively the protective device is used, the individual protective elements first enable a defined positioning in the sense of installation and then also in curved pipe courses favor a stationary installation position.

Further according to the invention a use of the protection device according to the invention with a wiring harness or with a single wire to be protected or a single pipe to be protected or a rope to be protected, while being respectively positioning in a tube, is presented.

The advantages mentioned above apply in a comparable way to the uses presented.

Thus, one idea of the present invention is to provide a protective device which helps to secure wires or wiring harnesses when they are routed or positioned inside a pipe. In particular, protection should be possible so that the high aviation safety standards can be met with great care.

On the one hand, the protective device presented is intended to help preventing contact of the wiring harness or the wire with the tube, into which the wiring harness or the wire is inserted, and, at the same time, to provide sufficient flexibility so that movements of the wiring harness or the wire during installation or during the life cycle are possible within certain limits.

Advantageous embodiments and improvements of the present invention are found in the subordinate claims.

According to an embodiment of the invention, the protective element arrangement is designed in several separated parts, with a smallest stand-alone protective element comprising a second section and two first sections enclosing this second section.

Such a modular structure promotes a particularly defined positioning of the protective device, for example on a wiring harness, so that the aforementioned advantages can be achieved even better.

In some embodiments of the inventions, the second section and the two first sections are connected to each other to form a substantially wave-shaped shape or wherein the second section and the two first sections are materially connected to one another to form a substantially wave-shaped shape.

The individual sections can, for example, be plugged together or arranged together in any other way. For example, they can also be glued or screwed together or even stapled together. This modular arrangement enables a particularly flexible construction of the protective device in order to achieve a particularly defined adaptation to a respective installation scenario.

In the second alternative, a materially solid connection is also conceivable, as results from an injection molding manufacturing process or a 3D printing process, for example. These prefabricated elements promote an arrangement that can be assembled quickly, resulting in cost-effective installation while using the protective device.

According to another embodiment of the invention, each smallest stand-alone protective element comprises respectively a first and a second coupling element at its respective elongated end regions, which are each designed to be coupled to one another, so that the protective element arrangement can be extended as desired by means of further coupled protective elements.

These coupling elements can be, for example, simple plug connection elements. In other words, for example, the first coupling element can essentially have the shape of a plug and the second coupling element can essentially have the shape of a shell, the shell being designed to accommodate the plug in a form-fitting manner or the like, so that a fixed and at the same time releasable plug connection can be provided.

It is also possible that these coupling elements are magnetic coupling elements, which differ accordingly, so that a temporary connection between these coupling elements can be achieved.

Respective counterparts of a snap connection, a knot connection, a press connection or the like are also conceivable.

Depending on the length of the wiring harness on which the protective device is to be arranged, a flexible arrangement can thus advantageously be provided.

According to an embodiment of the invention, the smallest stand-alone protective element has an overall length between 0,05 and 4 m, more particular between 0,1 and 3,5 m, more particular between 1 and 3 m, more particular between 2 and 3 m.

It is conceivable that elements to be used all have the same lengths. However, it is also conceivable that different lengths can be combined with one another in order to provide a particularly adaptable protective device. For applications with particularly long wiring harnesses, lengths between 2 and 3 meters have proven to be particularly advantageous.

In some embodiments of the inventions, the first and second sections are interrelated to each other to form a substantially wave-shaped shape or wherein the first and second sections are materially connected to one another to form a substantially wave-shaped shape.

The individual sections can, for example, be plugged together or arranged together in any other way. For example, they can also be glued or screwed together or even stapled together. This modular arrangement enables a particularly flexible construction of the protective device in order to achieve a particularly defined adaptation to a respective installation scenario.

In the second alternative, a materially solid connection is also conceivable, as results from an injection molding manufacturing process or a 3D printing process, for example. These prefabricated elements promote an arrangement that can be assembled quickly, resulting in a cost-effective installation while using the protective device.

According to another embodiment of the invention, the protective element arrangement comprises fastening means which are designed to be arranged in regions of the respective first sections or wherein the protective element arrangement comprises fastening means which are designed to be arranged in a continuously adjustable manner in regions of the respective first sections, so that the protective device can be arranged essentially stationary on the wiring harness.

An essentially stationary positioning of the protective device on the wiring harness can thus be achieved. The fastening means can advantageously be provided so that their special design for the regions of the respective first sections promotes particularly close contact of these first sections to the cable harness on which the protective device is arranged, so that particularly precise positioning of the first regions on the wiring harness is achieved and a substantially stationary installation position is possible.

For example, clip elements or the like can be provided as fastening means. Such clip elements can consist of individual parts of the protective device or can also be at least partially an integral part of the protective elements.

As a simple example of fastening means, which are designed to be arranged in a continuously adjustable manner, cable tie elements or the like can be used.

A continuously adjustable manner offers the advantage that a precise adjustment further promotes the advantages mentioned above.

According to an embodiment of the invention, the protective element arrangement comprises passages so that the wiring harness can be placed from a longitudinal side of the protective device in an essentially central position within the protective device.

A flexible application is therefore possible in an advantageous manner, which enables a cost-effective application in the sense of a production process in the course of installation scenarios of the wiring harness.

The passages provided also advantageously enable fluids or gases in the tube in which the protective device is arranged to flow easily past the wiring harness and the protective device. Maintenance work is also facilitated in this advantageous way.

In some embodiments of the inventions, the protective element arrangement is essentially made of a flexible material, in particular of plastic, more particular selected from: ABS, ASA, PA, PAEK, PC, PCTFE, PEEK, PEI, PEKK, PESU, PETG, PI, POM, PP, PPS, PTFE, PVA, TPE, TPU.

In particular, the use of plastics offers the advantage that they cannot contribute to any undesirable effects in connection with electrical wires, so that a particularly safe protective device can be provided.

According to another embodiment of the invention, the protective element comprises respectively a first and a second coupling element at its respective elongated end regions, which are each designed to be coupled to one another.

These coupling elements can be, for example, simple plug connection elements. In other words, for example, the first coupling element can essentially have the shape of a plug and the second coupling element can essentially have the shape of a shell, the shell being designed to accommodate the plug in a form-fitting manner or the like, so that a fixed and at the same time releasable plug connection can be provided.

It is also possible that these coupling elements are magnetic coupling elements, which differ accordingly, so that a temporary connection between these coupling elements can be achieved.

Respective counterparts of a snap connection, a knot connection, a press connection or the like are also conceivable.

In some embodiments of the inventions, a cross section of the protective element is selected from: substantially rectangular, substantially square shape, substantially polygonal shape, substantially rectangular shape with one convex side and one concave side, which is opposite of the convex side, substantially rectangular with one convex side and one even side, which is opposite of the convex side.

Depending on the application of the protective device, a correspondingly advantageous cross-section may be provided.

According to another embodiment of the invention, an extent of an amplitude of the wave-shaped shape is at most between 1/8 and ½, more preferable between 1/5 and ½, more preferable between ¼ and ½ of a total length of the element.

The extent of the amplitude of the wave-shaped shape determines how far spacing can be achieved when the protective device is used. In addition, this design can offer advantages if a particularly curved course of the pipe in which the protective device is to be arranged has to be taken into account.

In some embodiments of the inventions, the first and second sections of the protective element are essentially made of a flexible material, in particular of plastic, more particular selected from: ABS, ASA, PA, PAEK, PC, PCTFE, PEEK, PEI, PEKK, PESU, PETG, PI, POM, PP, PPS, PTFE, PVA, TPE, TPU.

In particular, the use of plastics offers the advantage that they cannot contribute to any undesirable effects in connection with electrical wires, so that a particularly safe protective device can be provided.

### BRIEF SUMMARY OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention.

Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.

The present invention is explained in more detail below with reference to the embodiments shown in the schematic figures:
- Fig. 1: a three-dimensional schematic partial view of a protective device;
- Fig. 2: a schematic top view of a partial view of a protective device;
- Fig. 3: a schematic side view of a protective element.
- Fig. 4: a schematic sectional view of another protective device;
- Fig. 5: a schematic sectional view of another protective device.

In the figures of the drawing, elements, features and components which are identical, functionally identical and of identical action are denoted in each case by the same reference designations unless stated otherwise.

### DESCRIPTION OF EXEMPLARY EMBODIMENTS

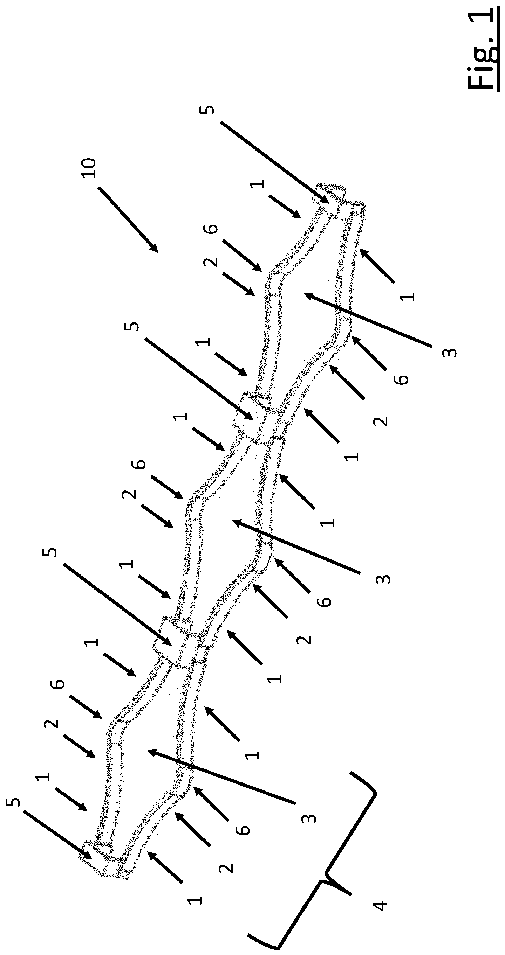

Fig. 1 shows a three-dimensional schematic partial view of a protective device 10. The protective device 10 is designed to be arranged around a wiring harness (not shown). It is also conceivable that the protective device 10 shown is designed to be arranged around a single wire or a single pipe or a rope or the like.

The protective device 10 is shown with first sections 1 and second sections 2, which enclose a resulting gap 3 in which a wiring harness, not shown in detail, can be placed in a longitudinal direction relative to the protective device 10. In this case the first sections 1 would be then in direct contact with the wiring harness and the second sections 2 would be spaced apart from the wiring harness.

The first and second sections 1, 2 would then alternate iteratively in a longitudinal direction of the wiring harness on which the protective device 10 is to be arranged, so that the wiring harness can be spaced from inner wall areas of a tube (not shown) by the protection device 10 during positioning in this tube.

The first sections 1 enclose respectively one second section 2 to form a substantially wave-shaped shape 4. This substantially wave-shaped shape, which each consists of two first sections 1 and a second section 2, has three turning points in the sense of a geometric figure in FIG. 1, so that only one amplitude of this wave-shaped shape is formed.

However, in an embodiment not shown in more detail, more than three turning points can be provided, so that a kind of amplitude arrangement with several amplitudes can be provided. The substantially wave-shaped shape 4 can have, for example, a wavelength between 0,05 and 0,11 m. An amplitude of each wave can depend on the inner diameter of the wiring harness.

Fastening means are shown in the form of a first half of clip elements 5 between respective wave-shaped shapes 4.

A counterpart, not shown in more detail, is comparable to the partial view of the protective device 10 shown in FIG 1. In principle, it is designed to be identical in construction, although corresponding counterparts of the clip elements 5 are provided instead of those shown in FIG 1. Rotated by 90°, this counterpart can then be clipped onto the section of the protective device shown in FIG. 1, so that second sections 2 now enable spacing to the outside in all directions.

The positions of the wave-shaped shapes 4 of the two parts of the protective device 10 should be identical, so that in respective regions with first sections 1, contact of all first sections 1 with a wiring harness to be positioned in the middle of the protective device 10 can be ensured.

The protective device 10 and its counterpart need to be flexible because during installation, for example, they will receive some force and the element needs to follow bended courses of pipes in which they will be routed. This can lead to tensile forces and compressive forces on the protective device 10 and its counterpart. The two parts presented, which can be clipped together, for example, can also be open or cut between two respective wave-shaped shapes 4 so that the protective device 10 and its counterpart have the ability to put the wiring harness into it from the side.

For installability and manufacturability reasons, the protective device 10 and its counterpart could be manufactured in 2 to 3 m segments, for example. The protective device 10 and its counterpart can comprise further coupling elements at its respective longitudinal end regions so that they have the ability to connect to next parts to extend an overall length.

During pulling the wiring harness inclusive the entire protective device 10 through a pipe, for example, the entire protective device 10 or every single part of it shall stay in place on the wiring harness. Even the respective wave-shaped shapes 4 shall stay on their position and orientations during installation and operations with a minimum of degrees of freedom so that rounded courses of the pipe can be compensated during installation before an end position is reached.

In an embodiment not shown in more detail, simple cable tie elements can also be provided instead of the clip elements. In other words, in this case, the first sections must be designed in such a way that the cable tie elements to be used then enable cohesion or a stationary position of the protective device 10 on a wiring harness when lashed together. These cable tie elements can be designed to be arranged in a continuously adjustable manner.

The wave-shaped shapes 4 are shown in Fig.1 exemplary with reinforcement areas 6. Embodiments without these reinforcement areas 6 are conceivable. These reinforcement areas 6 are provided in a region of the second sections 2 where the protective device 10 would rest in the installed state on an inner wall of a pipe (not shown) in which the protective device 10 is to be placed. These reinforcement areas 6 can be made of the same material as the second sections 2, for example, this can simply be a reinforcement of the material of the second sections 2.

Further reinforcing materials can also be incorporated into the material of the second sections 2. In an embodiment not shown, these reinforcement areas 6 can also be separate reinforcing elements, which are to be arranged accordingly at the locations shown.

The reinforcement areas 6 can also be provided with means on their outward-facing surface that promote a smooth installation of the protective device 10 in the sense of essentially friction-free positioning. These agents can, for example, be agents containing Teflon or the like.

The shown protective device 10 in Fig.1 and the not shown counterpart can be both, for example, manufactured in one piece using a 3D printing process. Any multi-part structure is also conceivable, whereby the individual printed parts can then be brought together in the form of a modular system. Alternative manufacturing processes, such as injection moulding processes or the like, are also conceivable.

In an embodiment not shown in more detail, for example, two first sections 1, which enclose a second section 2, can be provided as a stand-alone unit. These units can be designed to be coupled to one another using coupling elements provided for this purpose.

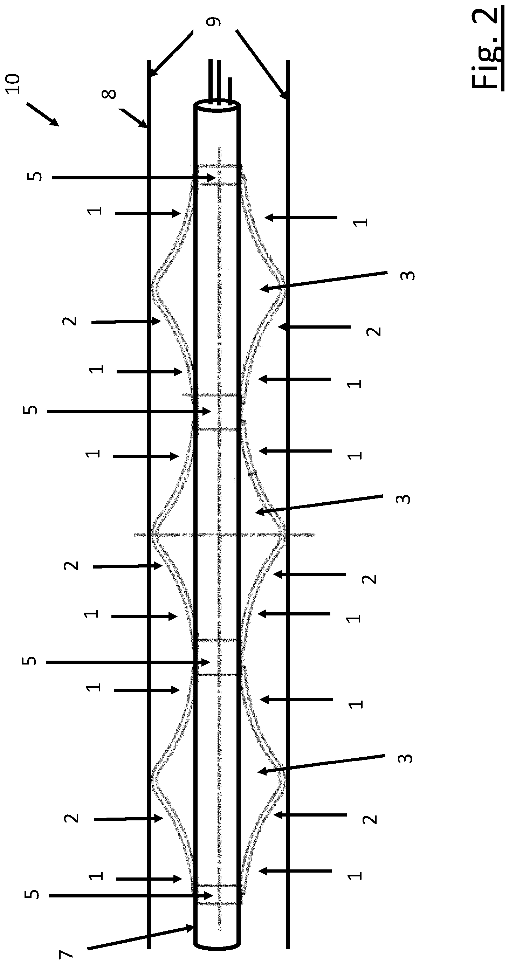

Fig. 2 shows a schematic top view of a partial view of a protective device 10.

The protective device 10 shown is essentially the same as in FIG. 1. The same reference numbers in FIG. 2 indicate the same parts of the protective device 10 as in FIG. 1. A wiring harness 7 is shown in the free space of the gap 3. The protective device 10 is also shown arranged in a tube 8.

For example, an application scenario is conceivable in which the wiring harness 7 with the protective device 10 is first inserted into a protective tube 8 in order to then at least partially place this arrangement in a tank, in particular a cryogenic hydrogen tank.

The wiring harness 7 is protected from external influences by means of the protective tube 8 and the protective device 10 ensures that the wiring harness 7 is positioned essentially centrally inside the protective tube 8 so that contact with the inner walls 9 of the protective tube 8 can be avoided.

When the wiring harness 7 moves relative to the protective tube 8, chafing on the inner walls 9 of the protective tube 8 is reliably avoided. Noises that can occur due to the wiring harness 7 hitting the inner walls 9 of the protective tube 8 are also reliably prevented.

In this respect, the protective device 10 can also be referred to as a harness bracket for inner pipes. The presented invention helps therefore to get wiring harness 7 or simply wires into a tank, for example a cryogenic hydrogen tank, through pipe works (e. g. protective tube 8) with the attention of strict aviation requirements (chafing, clearance). It is imaginable to use the invention everywhere wires or wiring harness 7 or smaller pipes or ropes have to be routed inside pipes (larger pipes, protective tubes 8). In other words, even smaller pipes or ropes routed inside pipes (e.g., protective tubes 8) could use the presented invention.

The first sections 1 and second sections 2 of the protective device 10 can also be named as a protective element arrangement, which is designed to be arranged around the wiring harness 7. This protective element arrangement is shown with first sections 1 in direct contact with the wiring harness 7 and second sections 2 spaced apart from the wiring harness 7, wherein the first and second sections 1, 2 alternate iteratively in a longitudinal direction of the wiring harness 7 on which the protective device 10 is arranged, so that the wiring harness 7 can be spaced from inner wall areas 9 of the tube 8 by the protection device 10 during positioning in this tube 8.

In an embodiment not shown in more detail, it is conceivable that the first and second sections 1, 2 are each made of a type of at least partially permeable foam or the like. Cork-like structures or honeycomb-like structures are also conceivable.

The aforementioned structures can be designed so that they form a protective element arrangement of the protective device 10, which is designed to be arranged around a wiring harness 7, with first sections 1 in direct contact with the wiring harness 7 and second sections 2 spaced apart from the wiring harness 7, wherein the first and second sections 1, 2 alternate iteratively in a longitudinal direction of the wiring harness 7 on which the protective device 10 is arranged, so that the wiring harness 7 can be spaced from inner wall areas of a tube 8 by the protection device 10 during positioning in this tube 8.

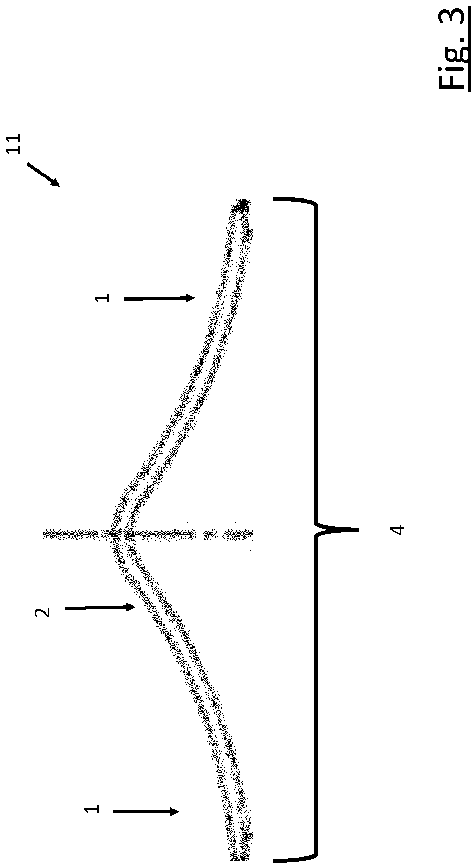

Fig. 3 shows a schematic side view of a protective element 11. The protective element 11 can be used in a protection device 10 according to the presented invention. The protective element 11 is shown with a second section 2 and two first sections 1 enclosing this second section 2 wherein the second section 2 and the two first sections 1 are materially connected to each other to form substantially wave shaped shape 4 so that the second section 2 is a part of an amplitude arrangement of the wave-shaped shape 4.

In another embodiment not shown in more detail, it is conceivable that the second section 2 and the two first sections 1 are simply connected to each other to form a substantially wave shaped shape 4 so that the second section 2 is a part of an amplitude arrangement of the wave-shaped shape 4. This means that they are connected to one another, for example, by means of adhesive bonding or any mechanical connection. The protective element 11 can be used as a smallest stand alone protective element according to the presented invention.

In embodiments not shown in more detail, it is conceivable that a cross section of the protective element 11 is selected from: substantially rectangular, substantially square shape, substantially polygonal shape, substantially rectangular shape with one convex side and one concave side, which is opposite of the convex side, substantially rectangular with one convex side and one even side, which is opposite of the convex side.

In embodiments not shown in more detail, it is conceivable that an extent of an amplitude of the wave-shaped shape 4 is at most between 1/8 and ½, more preferable between 1/5 and ½, more preferable between ¼ and ½ of a total length of the protective element 11. It is conceivable that further lengths can be provided, especially in the sense of a modular principle.

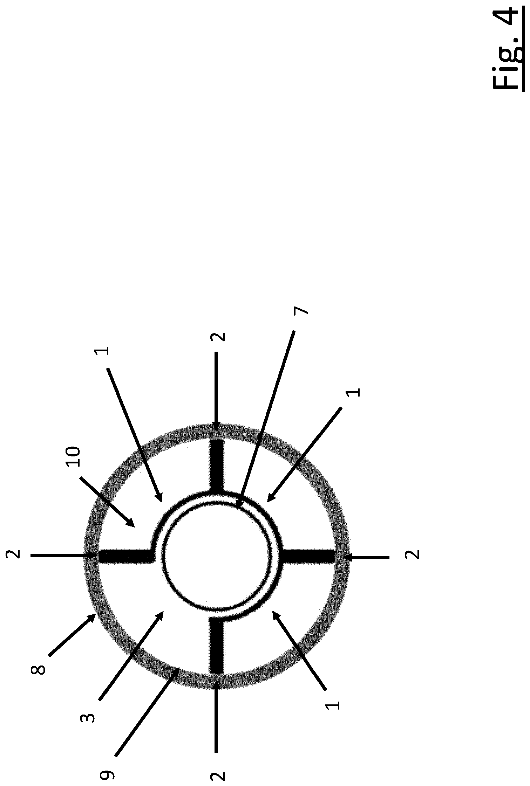

Fig. 4 shows a schematic sectional view of another protective device 10. The protective device 10 is designed to be arranged around the shown wiring harness 7. It is also conceivable that the protective device 10 shown is designed to be arranged around a single wire or a single pipe or a rope or the like.

The protective device 10 is shown with first sections 1 and second sections 2, which enclose a resulting gap 3 in which the wiring harness 7 can be placed in a longitudinal direction relative to the protective device 10.

In this case the first sections 1 is not in direct contact with the wiring harness 7 and the second sections 2 is spaced apart from the wiring harness 7. In this respect, the wiring harness 7 has certain degrees of freedom in order to be guided and positioned within the protective device 10.

However, in further embodiments of this exemplary embodiment, it is conceivable that the wiring harness 7 is provided adjacent to the protective device 10, it being noted that a relative movement of the wiring harness 7 to the protective device 10 for the purposes of positioning and guidance of the wiring harness 7 within the protective device 10 remains guaranteed.

In each of the cases mentioned, the wiring harness 7 is spaced apart from inner walls 9 of a shown tube 8, since the protective device 10 reliably prevents this. The second sections 2 lie almost on the inner walls 9 of the tube 8.

Here it must be taken into account in the respective embodiments of this example that a relative movement between the tube 8 and the protective device 10 remains guaranteed. In embodiments of this exemplary embodiment not shown, it is conceivable that certain degrees of freedom are provided between the respective sections 2 and the inner walls 9 of the tube 8, for example, so that easier positioning is possible.

The protective device 10 is essentially provided in one piece in FIG. 4, with the respective sections 1, 2 shown being shown connected to one another.

The second sections 2 are shown above and below and to the right and left of the image plane, with two sections 2 facing each other. Respective sections 1 are shown between respective two sections 2.

It is conceivable, for example, that the protective device 10 shown in FIG. 4 is produced in an injection molding process. Alternative manufacturing methods are conceivable.

However, it is conceivable that only some of sections 1, 2 are, for example materially, connected to one another and other sections 1, 2 are only detachably connected to the other sections 1, 2. For example, it is conceivable that the protective device 10 shown in FIG. 4 is the result of two mutually arranged protective devices 10 from FIG. 1, whereby these are then arranged 90° apart from one another.

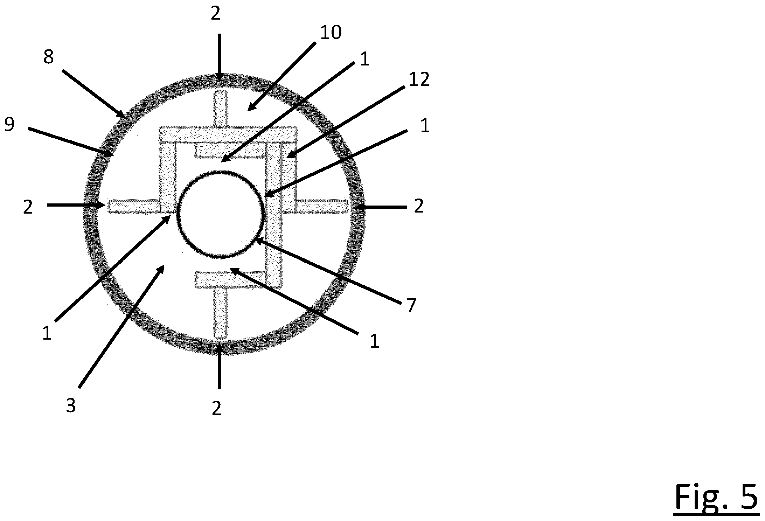

Fig. 5 shows a schematic sectional view of another protective device 10. The protective device 10 is designed to be arranged around the shown wiring harness 7. It is also conceivable that the protective device 10 shown is designed to be arranged around a single wire or a single pipe or a rope or the like.

The protective device 10 is shown with first sections 1 and second sections 2, which enclose a resulting gap 3 in which the wiring harness 7 can be placed in a longitudinal direction relative to the protective device 10.

The protective device 10 is shown in FIG. 5 by means of a large number of individual, essentially rectangular components 12, each of which differs in its length and width shown. It is conceivable that these individual components 12 are, for example, manufactured individually and then connected to one another, for example by means of an adhesive connection or any mechanical connections with or without additional connecting means. For reasons of clarity in FIG. 5, only one reference number 12 is shown as representative of all corresponding components 12 in FIG. 5.

However, it is also conceivable that the protective device 10 shown in FIG. 5 is the result of a 3D printing process or the like, with the individual components 12 shown in this case only being printed sections shown schematically.

The protective device 10 is shown with first sections 1 and second sections 2, which enclose a resulting gap 3 in which the wiring harness 7 can be placed in a longitudinal direction relative to the protective device 10.

The second sections 2 are shown above and below and to the right and left of the image plane, with two sections 2 facing each other. Respective sections 1 are shown between respective two sections 2. The sections 1 are each shown arranged between respective sections 2.

In Fig. 5 only two sections 1 (right and left, related to the image plane) are shown in direct contact with the wiring harness 7. The other two sections 1 have respective degrees of freedom, so that they do not lie directly on the wiring harness 7. In this way, positioning of the wiring harness 7 is easier because there is a certain freedom of movement within the protective device 10 without the actual function of the protective device being reduced.

However, in embodiments of this exemplary embodiment that are not shown, it is conceivable that approximately three sections 1 or only one section 1 have direct contact with the wiring harness 7. It is also conceivable that all sections 1 have sufficient contact with the wiring harness 7, so that positioning, i.e. a relative freedom of movement between the wiring harness 7 and the protective 7, remains possible in the sense of the present invention.

### LIST OF REFERENCE SIGNS

- 1: first section
- 2: second section
- 3: gap
- 4: wave-shaped shape
- 5: clip element
- 6: reinforcement area
- 7: wiring harness
- 8: tube
- 9: inner wall
- 10: protective device
- 11: protective element
- 12: component

## Claims

1. Protection device (10) for wiring harnesses (7) comprising a protective element arrangement, which is designed to be arranged around a wiring harness (7), with first sections (1) in direct contact with the wiring harness (7) and second sections (2) spaced apart from the wiring harness (7), wherein the first and second sections (1, 2) alternate iteratively in a longitudinal direction of the wiring harness (7) on which the protective device (10) is arranged, so that the wiring harness (7) can be spaced from inner wall areas of a tube (8) by the protection device (10) during positioning in this tube (8).

2. Protection device (10) according to claim 1, wherein the protective element arrangement is designed in several separated parts, with a smallest stand-alone protective element comprising a second section (2) and two first sections (1) enclosing this second section (2).

3. Protection device (10) according to claim 2, wherein the second section (2) and the two first sections (1) are connected to each other to form a substantially wave-shaped shape (4) or wherein the second section (2) and the two first sections (1) are materially connected to one another to form a substantially wave-shaped shape (4).

4. Protection device (10) according to claim 2 or claim 3, wherein each smallest stand-alone protective element comprises respectively a first and a second coupling element at its respective elongated end regions, which are each designed to be coupled to one another, so that the protective element arrangement can be extended as desired by means of further coupled protective elements.

5. Protection device (10) according to one of the claims 2 to 4, wherein the smallest stand-alone protective element has an overall length between 0,05 and 4 m, more particular between 0,1 and 3,5 m, more particular between 1 and 3 m, more particular between 2 and 3 m.

6. Protection device (10) according to claim 1, wherein the first and second sections (1, 2) are interrelated to each other to form a substantially wave-shaped shape (4) or wherein the first and second sections (1, 2) are materially connected to one another to form a substantially wave-shaped shape (4).

7. Protection device (10) according to one of the claims 1 to 6, wherein the protective element arrangement comprises fastening means which are designed to be arranged in regions of the respective first sections (1) or wherein the protective element arrangement comprises fastening means which are designed to be arranged in a continuously adjustable manner in regions of the respective first sections (1), so that the protective device (10) can be arranged essentially stationary on the wiring harness (7).

8. Protection device (10) according to one of the previous claims, wherein the protective element arrangement comprises passages so that the wiring harness (7) can be placed from a longitudinal side of the protective device (10) in an essentially central position within the protective device (10).

9. Protection device (10) according to one of the previous claims, wherein the protective element arrangement is essentially made of a flexible material, in particular of plastic, more particular selected from: ABS, ASA, PA, PAEK, PC, PCTFE, PEEK, PEI, PEKK, PESU, PETG, PI, POM, PP, PPS, PTFE, PVA, TPE, TPU.

10. Protective element (11) for use in a protection device (10) according to one of the claims 1 to 9 comprising a second section (2) and two first sections (1) enclosing this second section (2) wherein the second section (2) and the two first sections (1) are connected to each other to form a substantially wave-shaped shape (4) or wherein the second section (2) and the two first sections (1) are materially connected to one another to form a substantially wave-shaped shape (4), so that the second section (2) is a part of an amplitude arrangement of the wave-shaped shape (4).

11. Protective element (11) according to claim 10, comprising respectively a first and a second coupling element at its respective elongated end regions, which are each designed to be coupled to one another.

12. Protective element (11) according to claim 10 or claim 11, wherein a cross section of the protective element (11) is selected from: substantially rectangular, substantially square shape, substantially polygonal shape, substantially rectangular shape with one convex side and one concave side, which is opposite of the convex side, substantially rectangular with one convex side and one even side, which is opposite of the convex side.

13. Protective element (11) according to one of the claims 10 to 12, wherein an extent of an amplitude of the wave-shaped shape (4) is at most between 1/8 and ½, more preferable between 1/5 and ½, more preferable between ¼ and ½ of a total length of the element.

14. Protective element (11) according to one of the claims 10 to 13, wherein the first and second sections (1, 2) are essentially made of a flexible material, in particular of plastic, more particular selected from: ABS, ASA, PA, PAEK, PC, PCTFE, PEEK, PEI, PEKK, PESU, PETG, PI, POM, PP, PPS, PTFE, PVA, TPE, TPU.

15. Use of the protection device (10) according to one of the claims 1 to 9 with a wiring harness (7) or with a single wire to be protected or a single pipe to be protected or a rope to be protected while being respectively positioning in a tube (8).
